# EUROPÄISCHE PATENTSCHRIFT

(11) **EP 0 576 968 B1**
(45) Veröffentlichungstag und Bekanntmachung des Hinweises auf die Patenterteilung: **04.06.2003**
(21) Anmeldenummer: 93109952.7
(22) Anmeldetag: 22.06.1993
(51) Int. Cl.: H04Q 11/04, H04M 11/06, H04L 12/64

(54) **Kommunikationssystem für Mehrdienste-Kommunikationsendeinrichtungen in lokalen Netzen**
Communication system for multiservice terminals in a local area network
Système de communications pour des terminaux à services multiples dans un réseau local

(30) Priorität: 30.06.1992 DE 4221474
(43) Veröffentlichungstag der Anmeldung: 05.01.1994
(73) Patentinhaber: SIEMENS AKTIENGESELLSCHAFT, 80333 München (DE)
(72) Erfinder: Müller, Henrik, Dipl.-Ing., D-8000 München 60 (DE)

(56) Entgegenhaltungen:
- JP-A- 3 148 940
- US-A- 4 757 497
- US-A- 4 843 606
- SCHNEIDER H: "VOM SPEZIAL-ZUM UNIVERSALNETZ" FUNKSCHAU, Nr. 23, 3. November 1989, Seite 67, 70/71 XP000072484
- SAN-QI LI ET AL: "AN ILAN - ISDN GATEWAY" DIGITAL TECHNOLOGY - SPANNING THE UNIVERSE, PHILADELPHIA, JUNE 12 - 15, 1988, Bd. 1, 12. Juni 1988, Seiten 101-106, XP000012919 INSTITUTE OF ELECTRICAL AND ELECTRONICS ENGINEERS

## Beschreibung

In Kommunikationsnetzen sind zunehmend Kommunikationsendgeräte vorgesehen, die mit mehreren Kommunikationsdiensten bzw. Kommunikationsfunktionen ausgestattet sind. Diese, in der Fachwelt als "Multimedia"-Kommunikationsendgeräte bzw. Mehrdienste-Kommunikationsendgeräte bekannten Einrichtungen stellen beispielsweise rechnergesteuerte Endgeräte dar, die an lokale Netze angeschlossen sind. Derartige Kommunikationsendgeräte sind beispielsweise durch "work stations" realisiert, die untereinander über lokale Netze kommunizieren. Die lokalen Netze sind überwiegend durch die bekannten ringförmigen Netze, Busnetze und Kombinationen von ringförmigen Netzen und Busnetzen gebildet. Üblicherweise sind als Zugriffsverfahren auf die Transportfunktion der lokalen Netze bei ringförmigen Netzen das "Token-Passing"-Verfahren und bei busförmigen Netzen das CSMA/CD-(Carrier Sense Multiple Access with Collision Detection)-Verfahren vorgesehen. Die Signalisierungs- und Transportfunktionen für diese Zugriffsverfahren sowie die physikalischen Eigenschaften der Zugriffseinrichtungen sind für ringförmige Netze und Busnetze in den ANSI/IEEE-Standards 802.3 bis 802.6 standardisiert.

Bei der Implementierung von bekannten Schmalband- und Fernsprechkommunikationsfunktionen (z. B. Fernsprechen, Facsimile, Videotext und andere 64 kBit/s-Dienste) zusätzlich zu den Funktionen bzw. Diensten in dem jeweiligen lokalen Netz in "Multimedia"-Kommunikationsendeinrichtungen sind die bekannten Signalisierungsverfahren zu beachten. Da Signalisierungs- und Übermittlungsprozeduren in "Multimedia"-Kommunikationsendeinrichtungen vorwiegend für Dienste in lokalen Netzen bestimmt sind, sind für Schmalband- bzw. Fernsprechkommunikationsdienste zusätzliche Signalisierungs- und Übermittlungsfunktionen zu realisieren. Derartige Realisierungen erfordern insbesondere einen erheblichen zusätzlichen Programmaufwand in den Einrichtungen der lokalen Netze.

In der am 04.05.1993 nachveröffentlichten Patentschrift US-A-5208811, die auf der japanischen Patentschrift JP-A-03148940 vom 25.06.1991 basiert, wird ein Kommunikationssystem offenbart, bei dem Kommunikationsverbindungen zwischen Endgeräten eines lokalen Netzes und Endgeräten eines ISDN-Netzes durch eine zwischengeschaltete Übergangseinheit vermittelt werden. Die Übergangseinheit führt dabei eine Umsetzung zwischen dem Übertragungsprotokoll des lokalen Netzes und dem Übertragungsprotokoll des ISDN-Netzes durch. Aufgrund einer vorteilhaften Art der Zuordnung und Verknüpfung von Adreßinformationen des lokalen Netzes und Adreß- und Verbindungsinformationen des ISDN-Netzes kann der Umsetzungsprozeß als solcher besonders einfach gestaltet werden. Eine Realisierung zusätzlicher Signalisierungs- und Übermittlungsfunktionen für das lokale Netz wird dadurch jedoch nicht vereinfacht, sondern erfordert weiterhin einen erheblichen zusätzlichen Programmaufwand in den Einrichtungen des lokalen Netzes.

Aus der Patentschrift US-A-4757497 ist weiterhin ein verteiltes Kommunikationssystem bekannt, dessen Netzknoten durch ein ringförmiges Netzwerk zur asynchronen Datenübertragung und ein sternförmiges Netzwerk zur synchronen Sprachübertragung verbunden sind. Diese Aufteilung von Sprach- und Datenübertragung auf separate Netzwerke unterschiedlicher Topologie hat unter anderem den Vorteil, daß keine aufwendige Umsetzung zwischen asynchroner und synchroner Übertragung erforderlich ist. Jedoch erfordert auch bei einem solchen Kommunikationssystem eine Realisierung zusätzlicher Signalisierungs- und Übermittlungsfunktionen für ein gegebenenfalls angekoppeltes lokales Netz einen erheblichen zusätzlichen Programmaufwand in den Einrichtungen dieses lokalen Netzes.

Die der Erfindung zugrundeliegende Aufgabe besteht darin, in Kommunikationsendeinrichtungen von lokalen Netzen Schmalband- bzw. Fernsprechkommunikationsfunktionen mit möglichst geringem zusätzlichen Netzaufwand zu integrieren. Die Aufgabe wird durch die Merkmale des Anspruchs 1 gelöst.

Ein wesentlicher Aspekt des erfindungsgemäßen Kommunikationssystems ist darin zu sehen, daß durch eine Netzanpassungseinrichtung eine Kommunikationsanlage für die Realisierung der Signalisierungs- und Vermittlungsfunktionen für die Schmalband- bzw. Fernsprechkommunikationsfunktionen bzw. -dienste einbezogen wird und hierdurch das lokale Netz lediglich die Transportfunktionen für diese Funktionen bzw. Dienste bereitstellen muß.

Ein Vorteil des erfindungsgemäßen Kommunikationssystems ist darin zu sehen, daß durch den Einsatz der Netzanpassungseinrichtung die Funktionen beider Netze, d. h. die des lokalen Netzes und die des Schmalband- bzw. Fernsprechnetzes, weitgehend unverändert bestehen bleiben und somit eine erhebliche Modularität beim Aufbau und Ausbau von Kommunikationssystemen mit "Multimedia"-Kommunikationsendgeräten erreicht wird. Insbesondere bleibt das vorzugsweise in privaten Kommunikationsnetzen vorgesehene vorteilhafte Angebot von Teilnehmerleistungsmerkmalen für Schmalband- bzw. Fernsprechdienste ohne erheblichen Mehraufwand im lokalen Netz erhalten.

Die Teilnehmeranschlußstelle wird besonders vorteilhaft durch eine digitale Einzel- oder Multiplex-Teilnehmeranschlußschnittstelle gebildet - Anspruch 2. Bei derartigen "digitalen" Teilnehmeranschlußschnittstellen werden die Signalisierungs- und Nachrichteninformationen getrennt in einem Signalisierungs- und Nachrichtenkanal übertragen.
Die den Verbindungsauf- bzw. -abbau sowie die Teilnehmerleistungsmerkmale steuernden Signalisierungsinformationen werden hierbei überwiegend paketorientiert übermittelt. Die digitale Informationen oder digitalisierte Sprachsignale repräsentierenden Nachrichten werden hierbei im üblicherweise 64 kBit/s Bitrate aufweisenden Nachrichtenkanal übermittelt. Die Teilnehmeranschlußschnittstelle weist vorteilhaft einen oder zwei Nachrichtenkanäle und einen Signalisierungskanal - Einzel-Teilnehmeranschlußschnittstelle - oder mehrere - üblicherweise 30 oder 24 - Nachrichtenkanäle und einen Signalisierungskanal - Multiplex-Teilnehmeranschlußschnittstelle - auf.

Besonders vorteilhaft wird eine digitale Teilnehmeranschlußschnittstelle durch eine Teilnehmeranschlußschnittstelle eines standardisierten diensteintegrierenden Digitalnetzes realisiert. In der Fachwelt ist dieses Netz als ISDN-Netz (Integrated Services Digital Network) bekannt. Die prozeduralen und physikalischen Eigenschaften dieser ISDN-Teilnehmeranschlußschnittstellen sind in den Empfehlungen des CCITT (International Telegraph and Telephone Consultative Comitee) der I.- und Q.-Serie festgelegt. Die ISDN-Teilnehmeranschlußschnittstellen sind insbesondere in den CCITT-Empfehlungen 1.420 und I.421 beschrieben. Bei einer Realisierung der Teilnehmeranschlußschnittstelle gemäß CCITT-Empfehlung 1.420 kann diese durch eine S- oder T-Schnittstelle gemäß den S- und T-Referenzpunkten gebildet werden. Ferner sind noch wirtschaftlichere herstellerspezifische U-Teilnehmeranschluschnittstellen im Einsatz, die insbesondere auf die im Teilnehmeranschlußbereich von privaten Kommunikationsanlagen üblichen Entfernungen der Kommunikationsendgeräte von der Kommunikationsanlage abgestimmt sind.

Gemäß weiterer vorteilhafter Weiterbildungen des erfindungsgemäßen Kommunikationssystems sind die lokalen Netze durch ein ringförmiges Netz mit einem standardisierten "Token"-Zugriffsverfahren - Anspruch 4 - oder durch ein Busnetz mit Zufalls-Zugriffsverfahren, bekannt als CSMA/CD-Verfahren (Carrier Sense Multiple Access with Collision Detection) - Anspruch 5 - realisiert. Hierbei sind die Busnetze überwiegend nach dem internationalen ANSI/IEEE-Standard 802.3 und die ringförmigen Netze nach dem ANSI/IEEE-Standard 802.5 sowie 802.6 konzipiert.

Nach einer zusätzlichen vorteilhaften Ausgestaltung des erfindungsgemäßen Kommunikationssystems ist das lokale Netz durch ein sternförmiges Netz realisiert, wobei im Sternpunkt des lokalen Netzes eine paketorientierte Koppelanordnung im Sinne einer vermittlungstechnischen Steuerung der zu übermittelnden Nachrichten an die Kommunikationsendeinrichtungen angeordnet ist - Anspruch 6. Für derartige "intelligente" Sternpunkteinrichtungen sind seit kurzem Koppelanordnungen bekannt, deren Vermittlungsprinzipien auf der ATM-(Asynchron Transfer Mode)-Paketvermittlungstechnik basieren. Diese ATM-Paketvermittlungstechnik ist sowohl für die Vermittlung bzw. Übertragung von digitalisierten Sprachinformationen als auch digitalen Informationen geeignet. Mit Hilfe dieser intelligenten Sternpunkteinrichtungen sind z. B. die gemäß einem ringförmigen Netz zu übermittelnden Nachrichten unter Umgehung der nicht betroffenen Kommunikationsendeinrichtungen direkt an die adressierte Kommunikationsendeinrichtung über das jeweilige Übertragungsmedium übermittelbar. Hierdurch ist eine schnelle Übertragung der Nachrichten und damit eine besonders effektive Auslastung der vorhandenen Übertragungskapazität erreichbar.

Eine weitere vorteilhafte Weiterbildung des erfindungsgemäßen Kommunikationssystems ist darin zu sehen, daß in der Netzanpassungseinrichtung bzw. in den Kommunikationsendgeräten Mittel zur zeitlichen Anpassung der im lokalen Netz paketorientiert übermittelten Nachrichteninformationen an die isochrone Vermittlung bzw. Verarbeitung der Nachrichteninformationen in der Anpassungseinrichtung bzw. in den Kommunikationsendgeräten vorgesehen sind - Anspruch 7. Hierbei sind die Mittel durch taktgesteuerte Speichermittel gebildet, wobei die Speichermittelgröße sowie die Paketlänge der im lokalen Netz übermittelten Nachrichten- bzw. Signalisierungsinformationen unter Berücksichtigung der Ausdehnung des lokalen Netzes aufeinander abzustimmen ist - Anspruch 8. Die Paketlänge ist in Abhängigkeit von der Ausdehnung des lokalen Netzes zu bestimmen, wobei die Gesamtverzögerungszeit, die durch die paketorientierte Übermittlung der Schmalband- bzw. Fernsprechinformationen im lokalen Netz verursacht wird, in den Schmalband- bzw. Fernsprechkommunikationsverbindungen keine wahrnehmbaren Störungen bewirken darf.

Im folgenden wird das erfindungsgemäße Kommunikationssystem anhand zweier Blockschaltbilder erläutert.

Dabei zeigen
- FIG 1: ein Kommunikationssystem, bei dem eine Anpassungseinrichtung zwischen einem lokalen, ringförmigen Netz und einer Kommunikationsanlage, und
- FIG 2: ein Kommunikationssystem, bei dem eine Anpassungseinrichtung zwischen einem lokalen, sternförmigen Netz und einer Kommunikationsanlage eingefügt ist.

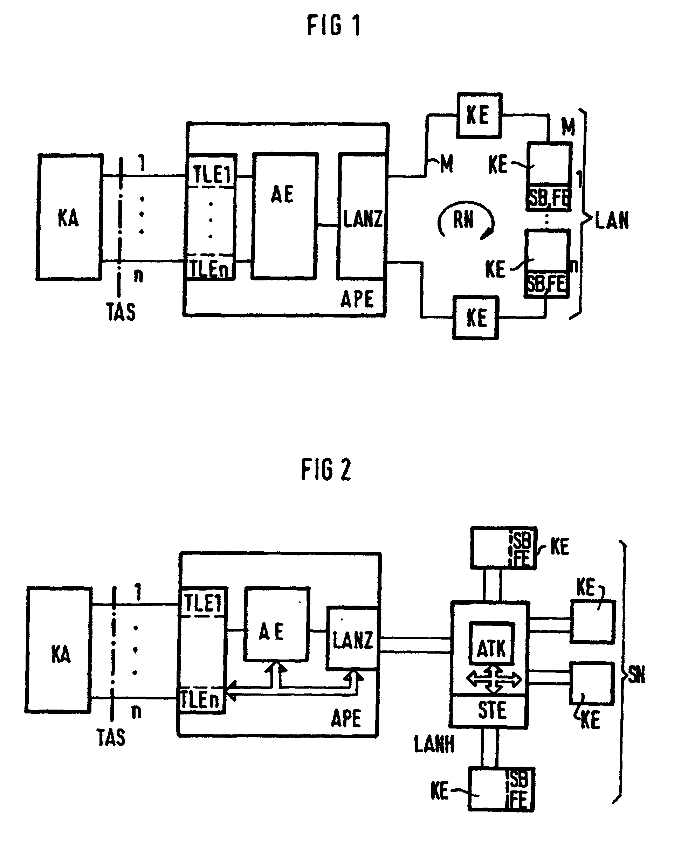

FIG 1 zeigt eine Netzanpassungseinrichtung APE, an die eine Schmalband- bzw. Fernsprechfunktionen aufweisende Kommunikationsanlage KA und ein lokales Netz LAN angeschlossen sind. Eine Kommunikationsanlage KA für Schmalband- bzw. Fernsprechfunktionen bzw. -dienste ist beispielsweise aus der veröffentlichten europäischen Patentanmeldung mit der Veröffentlichungsnummer 0 347 644 A1 bekannt. Die Kommunikationsanlage KA weist für den Anschluß von Schmalband- bzw. Fernsprechteilnehmerendeinrichtungen Teilnehmeranschlußschnittstellen TAS auf, wobei n dieser Teilnehmeranschlußschnittstellen TAS mit n Teilnehmereinrichtungen TLE1...TLEn der Netzanpassungseinrichtung APE verbunden sind. Die Teilnehmeranschlußschnittstellen TAS weisen beispielsweise die in digitalen Kommunikationsnetzen vorgesehenen zwei Nachrichtenkanäle à 64 kBit/s für die Übermittlung von insbesondere digitalisierten Sprachinformationen und einen Signalisierungskanal von beispielsweise 16 kBit/s auf. Die Signalisierungsinformationen werden beispielsweise nach dem international standardisierten D-Kanal-Protokoll in digitalen Kommunikationsnetzen übermittelt. In den Teilnehmereinrichtungen TLE1...TLEn sind im wesentlichen die aus den digitalen ISDN-Kommunikationsnetzen bekannten Netzabschlußfunktionen realisiert. Die Teilnehmeranschlußschnittstellen TAS sind auch als Primär-Multiplex-Schnittstelle mit z. B. einer Übertragungsrate von 2,048 MBit/s realisierbar. Diese Primär-Multiplex-Schnittstelle weist in diesem Falle 30 Nachrichtenkanäle und einen Signalisierungskanal auf. Der eine Bitrate von 64 kBit/s aufweisende Signalisierungskanal wird vorzugsweise für den Austausch von Signalisierungsinformationen für die 30 Nachrichtenkanäle genutzt. Beispielsweise ist hierfür der bei CCITT standardisierte E-Signalisierungskanal gemäß der CCITT-Empfehlung I.450 für die Verbindungssteuerung vorgesehen. Bei Einsatz einer Primär-Multiplex-Schnittstelle kann auf die einzelnen Teilnehmereinrichtungen TLE1...TLEn verzichtet werden und der Bitstrom direkt oder über eine übertragungstechnische Sendeund Empfangseinrichtung an eine nachfolgende Anpassungseinheit AE übermittelt werden. Bei Anschluß von n Teilnehmeranschlußschnittstellen TAS werden die von den Teilnehmereinrichtungen TLE1...TLEn empfangenen Signalisierungs- bzw. Nachrichteninformationen jeweils an die Anpassungseinheit AE weitergeleitet. Bei Vorliegen von S-oder T-Schnittstellen des ISDN-Basisanschlusses (z. B. S₀) als Teilnehmeranschlußschnittstellen TAS der Kommunikationsanlage können ebenfalls die Teilnehmereinrichtungen TLE1...TLEn entfallen und die Signalisierungs- bzw. Nachrichteninformationen direkt an die Anpassungseinheit AE geführt werden.

Die Anpassungseinheit AE ist mit einer Zugriffseinrichtung LANZ für das lokale Netz LAN verbunden. Für das Ausführungsbeispiel sei angenommen, daß das lokale Netz LAN durch ein ringförmiges Netz RN realisiert ist. Hierbei sind die Kommunikationsendeinrichtungen KE sowie die Zugriffseinrichtung LANZ mit Hilfe von Übertragungsmedien M ringförmig hintereinandergeschaltet. Das Übertragungsmedium M ist beispielsweise durch metallische Leitungen oder durch Lichtwellenleitersysteme realisiert. Bei den Kommunikationsendeinrichtungen KE des ringförmigen Netzes RN handelt es sich beispielsweise um Personal Computer (work stations) mit Zugriffseinrichtungen für das ringförmige Netz RN oder um sogenannte "Multimedia"-Kommunikationsendeinrichtungen KE.

Bei diesen "Multimedia"- oder multifunktionalen -Kommunikationsendeinrichtungen KE sind zusätzlich zu den in lokalen Netzen angebotenen Daten-Übermittlungsdiensten zusätzliche Dienste für Schmalband- bzw. Fernsprechfunktionen SB, FE vorgesehen. Schmalbanddienste stellen beispielsweise der Bildschirmtextdienst oder der Facsimiledienst dar. Für das Ausführungsbeispiel sei angenommen, daß die physikalischen und prozeduralen Eigenschaften des ringförmigen Netzes RN dem internationalen ANSI/IEEE-Standard 802.5 entsprechen. Als Zugriffsverfahren auf die Übermittlungskapazität des ringförmigen Netzes RN wird hierbei das "Token-Passing"-Zugriffsverfahren angewandt. Die Zugriffseinrichtungen der Kommunikationsendeinrichtungen KE des ringförmigen Netzes sowie die Zugriffseinrichtung LANZ in der Netzanpassungseinrichtung APE erfüllen die prozeduralen und physikalischen Bedingungen des ANSI/IEEE-Standards 802.5.

In der Anpassungseinheit AE werden die von den Kommunikationsendeinrichtungen KE mit Schmalband- bzw. Fernsprechfunktionen SB, FE über das ringförmige Netz RN übermittelten Signalisierungsinformationen bewertet, gegebenenfalls angepaßt und zusammen mit den übermittelten Nachrichteninformationen an die der jeweiligen Kommunikationsendeinrichtung KE zugeordneten Teilnehmeranschlußschnittstelle TAS der Kommunikationsanlage KA weitergeleitet. Analog hierzu werden die von der Kommunikationsanlage KA übermittelten Signalisierungsinformationen an die ringnetzspezifischen Signalisierungsprozeduren angepaßt und zusammen mit den übermittelten Nachrichteninformationen über die Zugriffseinrichtung LANZ an das ringförmige Netz RN bzw. an die jeweilige Kommunikationsendeinrichtung KE übermittelt. Hierbei ist jeder Kommunikationsendeinrichtung KE mit Schmalband- bzw. Fernsprechkommunikationsfunktionen SB, FE eine Teilnehmeranschlußschnittstelle TAS zugeordnet.

Die Signalisierungs- und Nachrichteninformationen für die Schmalband- bzw. Fernsprechkommunikationsdienste können in den betreffenden Kommunikationsendeinrichtungen KE des ringförmigen Netzes RN kommunikationsanlagengerecht gebildet und durch relativ geringen zusätzlichen programmtechnischen Aufwand mit Hilfe der Transportfunktion des ringförmigen Netzes RN an die Netzanpassungseinrichtung APE übermittelt werden. In der Anpassungseinheit AE der Netzanpassungseinrichtung APE werden die ringnetzspezifischen, meist paketorientierten Signalisierungsprozedurinformationen entfernt und an die Kommunikationsanlage KA weitergeleitet sowie von der Kommunikationsanlage KA übermittelte Signalisierungs- und Nachrichteninformationen an die ringnetzspezifische Übermittlungsprozedur angepaßt und an die betroffene Kommunikationsendeinrichtung KE gezielt übertragen. Durch das Einfügen der Netzanpassungseinrichtung APE wird ein Höchstmaß an Flexibilität und Modularität beim Aufbau von Kommunikationsnetzen erreicht, bei denen sogenannte "Multimedia"-Kommunikationsendeinrichtungen bzw. multifunktionale Kommunikationsendeinrichtungen KE mit Schmalband- bzw. Fernsprechkommunikationsfunktionen SB, FE in lokalen Netzen angeordnet sind. Des weiteren wird durch die Netzanpassungseinrichtung APE ein Übergang zu öffentlichen bzw. privaten Kommunikationsnetzen für in lokalen Netzen LAN angeordnete Kommunikationsendeinrichtungen KE mit Schmalband- bzw. Fernsprechfunktionen SB, FE bewirkt, wodurch weitere sogenannte "Gateway"- und "Bridge"-Einrichtungen vermieden werden.

In FIG 2 ist ebenfalls eine Netzanpassungseinrichtung APE dargestellt, an die über gemäß FIG 1 realisierte Teilnehmeranschlußschnittstellen TAS eine gemäß FIG 1 konzipierte Kommunikationsanlage KA und unterschiedlich zu FIG 1 ein als Sternnetz SN realisiertes lokales Netz LAN angeschlossen ist. In diesem Sternnetz SN sind neben den Sternnetzkommunikationsfunktionen aufweisenden Kommunikationsendeinrichtungen KE zusätzlich "Multimedia"-Kommunikationsendeinrichtungen KE, d. h. Kommunikationsendeinrichtungen KE mit Schmalband- bzw. Fernsprechkommunikationsfunktionen SB, FE, angeordnet. Für das Ausführungsbeispiel sei angenommen, daß in den "Multimedia"-Kommunikationsendeinrichtungen KE Schmalband- bzw. Fernsprechdienste SB, FE gemäß FIG 1 implementiert sind.

Die Kommunikationsendeinrichtungen KE des Sternnetzes SN sowie eine in der Netzanpassungseinrichtung APE angeordnete Zugriffseinrichtung LANZ sind sternförmig an eine Sternpunkteinrichtung LANH angeschlossen. Für das Ausführungsbeispiel sei angenommen, daß die Signalisierungs- und Nachrichteninformationen zwischen den Kommunikationsendeinrichtungen KE über die Sternpunkteinrichtung LANH durch paketorientierte Nachrichten, z. B. im ATM-(Asynchron Transfer Mode)-Paketübermittlungsmodus, übermittelt werden. Durch Auswertung der übermittelten Signalisierungsinformationen mit Hilfe einer in der Sternpunkteinrichtung LANH angeordneten Steuereinrichtung STE können durch eine Koppelanordnung ATK die den Signalisierungsinformationen zugeordneten Nachrichteninformationen über die jeweiligen Übertragungsmedien an die adressierten Kommunikationsendeinrichtungen KE bzw. Zugriffseinrichtungen LANZ übermittelt werden. Die von der Steuereinrichtung STE beeinflußbare Koppelanordnung ist beispielsweise gemäß der ATM-Paketübertragungstechnik konzipiert.

Analog zu FIG 1 werden die die Schmalband- bzw. Fernsprechkommunikationsdienste SB, FE betreffenden Signalisierungs- bzw. Nachrichteninformationen kommunikationsanlagengerecht gebildet und mittels der ATM-Paketübermittlungstechnik über die mit entsprechender Sende- und Empfangspaketvermittlungstechnik ausgestatteten Netzzugriffseinrichtung LANZ an eine in der Netzanpassungseinrichtung APE angeordnete Anpassungseinheit AE übermittelt. In dieser werden die sternnetzspezifischen Signalisierungs- bzw. Übertragungsrahmen entfernt bzw. angepaßt und die verbleibenden kommunikationsanlagengerechten Signalisierungs- und Nachrichteninformationen über mit den Teilnehmeranschlußschnittstellen TAS verbundene Teilnehmereinrichtungen TLE1...TLEn an die Kommunikationsanlage KA übermittelt. Analog hierzu werden die von der Kommunikationsanlage KA übermittelten Signalisierungs- bzw. Nachrichteninformationen in der Anpassungseinheit AE in ATM- bzw. sternnetzgerechte Informationen umgesetzt und über die Sternnetzeinrichtung LANH an die jeweilige Kommunikationsendeinrichtung KE übermittelt. Auch hierbei wird ein Höchstmaß an Flexibilität bzw. Modularität für die Konzipierung von Kommunikationsnetzen mit sogenannten "Multimedia"-Kommunikationsendeinrichtungen KE in lokalen Netzen LAN erreicht.

Alternativ können die Signalisierungs- bzw. Nachrichteninformationen für Schmalband- bzw. Fernsprechdienste SB, FE in den Kommunikationsendgeräten KE gemäß den Prozeduren und Übermittlungsinformationen des lokalen ringförmigen Netzes oder Sternnetzes SN gebildet und an die Netzanpassungseinrichtung APE übermittelt werden, jedoch sind in der Anpassungseinheit AE hierfür umfangreiche Anpassungs- bzw. Umsetzfunktionen, insbesondere hinsichtlich der Signalisierungsanpassung vorzusehen.

Anstelle des Ringnetzes RN oder des Sternnetzes SN kann auch ein lokales Busnetz - nicht dargestellt - an die Netzanpassungseinrichtung APE angeschlossen werden. Hierbei ist jedoch eine auf das lokale Busnetz abgestimmte Zugriffseinrichtung LANZ vorzusehen und in der Anpassungseinheit AE eine Behandlungsroutine für die Protokolle bzw. Signalisierung des ebenfalls paketorientierten Busnetzes zu integrieren.

## Patentansprüche

1. Kommunikationssystem mit an ein paketorientiertes lokales Netz (LAN) angeschlossenen Kommunikationsendeinrichtungen (KE), wobei die Kommunikationsendeinrichtungen (KE) jeweils zumindest teilweise Schmalband- oder Fernsprechkommunikationsfunktionen (SB, FE) aufweisen, wobei,
- eine die Schmalband- bzw. Fernsprechkommunikationsfunktionen (SB, FE) steuernde bzw. beeinflussende Kommunikationsanlage (KA) mit Teilnehmeranschlußschnittstellen (TAS) vorgesehen ist,
- zwischen dem lokalen Netz (LAN) und der Kommunikationsanlage (KA) eine Netzanpassungseinrichtung (APE) angeordnet ist, die über eine Zugriffseinrichtung (LANZ) an das lokale Netz (LAN) und über Teilnehmereinrichtungen (TLE) an Teilnehmeranschlußschnittstellen (TAS) der Kommunikationsanlage (KA) angeschlossen ist, wobei für jede Schmalband- oder Fernsprechkommunikationsfunktionen (SB, FE) aufweisende Kommunikationsendeinrichtung (KE) des lokalen Netzes (LAN) eine Teilnehmeranschlußschnittstelle (TAS) zwischen der Netzanpassungseinrichtung (APE) und der Kommunikationsanlage (KA) angeordnet ist,
- die Netzanpassungseinrichtung (APE) eine Anpassungseinheit (AE) aufweist, die derart ausgestaltet ist, daß die von den Kommunikationsendeinrichtungen (KE) bzw. von der Kommunikationsanlage (KA) im Rahmen der Verbindungssteuerung von Schmalband- oder Fernsprechkommunikationsverbindungen (SB, FE) übermittelten Signalisierungs- und Nachrichteninformationen an die Signalisierungsprozeduren und Nachrichtenformate der Kommunikationsanlage (KA) bzw. des lokalen Netzes (LAN) angepaßt werden, und
- die Kommunikationsanlage (KA) derart ausgestaltet ist, daß ein Verbindungsauf- und -abbau und/oder eine Beeinflussung von Leistungsmerkmalen der Schmalband- oder Fernsprechkommunikationsverbindungen (SB, FE) der Kommunikationsendeinrichtungen (KE) des lokalen Netzes (LAN) untereinander durch die Kommunikationsanlage (KA) gesteuert wird.

2. Kommunikationssystem nach Anspruch 1,
**dadurch gekennzeichnet,**
**daß** die Teilnehmeranschlußschnittstelle (TAS) in der Kommunikationsanalge (KA) bzw. der Netzanpassungseinrichtung (APE) durch eine digitale Einzel- oder Multiplex-Teilnehmeranschlußschnittstelle gebildet ist.

3. Kommunikationssystem nach Anspruch 1 oder 2,
**dadurch gekennzeichnet,**
**daß** die Teilnehmeranschlußschnittstelle (TAS) als Teilnehmeranschlußschnittstelle eines standardisierten, diensteintegrierenden Netzes (ISDN) realisiert ist.

4. Kommunikationssystem nach einem der vorhergehenden Ansprüche,
**dadurch gekennzeichnet**
**daß** das lokale Netz (LAN) durch ein ringförmiges Netz (RN) mit einem standardisierten Token-Zugriffsverfahren (Token-Passing) realisiert ist.

5. Kommunikationssystem nach einem der vorhergehenden Ansprüche,
**dadurch gekennzeichnet,**
**daß** das lokale Netz (LAN) durch ein Busnetz mit Zufalls-Zugriffsverfahren (CSMA/CD-Verfahren) realisiert ist.

6. Kommunikationssystem nach einem der vorhergehenden Ansprüche,
**dadurch gekennzeichnet,**
**daß** das lokale Netz (LAN) durch ein sternförmiges Netz (SN) realisiert ist, wobei im Sternpunkt des lokalen Netzes (SN) paketorientierte Koppelanordnungen (ATK) im Sinne einer vermittlungstechnischen Steuerung der zu übermittelnden Nachrichten angeordnet sind.

7. Kommunikationssystem nach einem der vorhergehenden Ansprüche,
**dadurch gekennzeichnet,**
**daß** in der Netzanpassungseinrichtung (APE) bzw. in den Kommunikationsendgeräten (KE) Mittel zur zeitlichen Anpassung der in lokalen Netzen (LAN) paketorientiert übermittelten Nachrichteninformationen an die isochrone Vermittlung bzw. Verarbeitung der Nachrichteninformationen in der Netzanpassungseinrichtung (APE) bzw. der Kommunikationsendgeräte (KE) vorgesehen sind.

8. Kommunikationssystem nach Anspruch 7,
**dadurch gekennzeichnet,**
**daß** die Mittel zur zeitlichen Anpassung durch taktgesteuerte Speichermittel gebildet sind, wobei die Speichermittelgröße sowie die Paketlänge der im lokalen Netz (LAN) übermittelten Nachrichten- bzw. Signalisierungsinformationen unter Berücksichtigung der Ausdehnung des lokalen Netzes (LAN) aufeinander abgestimmt ist.

9. Kommunikationssystem nach einem der vorhergehenden Ansprüche,
**dadurch gekennzeichnet,**
**daß** die Kommunikationsanlage (KA) derart ausgestaltet ist, daß ein Verbindungsauf- und -abbau und/oder eine Beeinflussung von Leistungsmerkmalen der Schmalband- oder Fernsprechkommunikationsverbindungen (SB, FE) der Kommunikationsendeinrichtungen (KE) des lokalen Netzes (LAN) zu weiteren Kommunikationsendeinrichtungen des Kommunikationssystems durch die Kommunikationsanlage (KA) gesteuert wird.

## Claims

1. Communications system having communications terminals (KE) which are connected to a packet-oriented local area network (LAN), with the communications terminals (KE) each having narrowband or telephone communications functions (SB, FE) at least at times,
- with a communications installation (KA) being provided which respectively controls and influences the narrowband and telephone communications functions (SB, FE) and has subscriber access interfaces (TAS),
- a network matching device (APE) is arranged between the local area network (LAN) and the communications installation (KA) and is connected via an access device (LANZ) to the local area network (LAN) and via subscriber devices (TLE) to subscriber access interfaces (TAS) for the communications installation (KA), with a subscriber access interface (TAS) being arranged between the network matching device (APE) and the communications installation (KA) for each communications terminal (KE) which has narrowband or telephone communications functions (SB, FE) in the local area network (LAN),
- the network matching device (APE) has a matching unit (AE) which is designed such that the signalling and message information which is transmitted by the communications terminals (KE) or by the communications installation (KA) in the course of connection control for narrowband or telephone communications connections (SB, FE) is matched to the signalling procedures and message formats of the communications installation (KA) and/or of the local area network (LAN), and
- the communications installation (KA) is designed such that the communications installation (KA) controls the connection setting-up and clearing and/or influencing of service features of the narrowband or telephone communications connections (SB, FE) between the communications terminals (KE) in the local area network (LAN).

2. Communications system according to Claim 1,
**characterized**
**in that** the subscriber access interface (TAS) in the communications installation (KA) or in the network matching device (APE) is formed by a digital single or multiplexed subscriber access interface.

3. Communications system according to Claim 1 or 2,
**characterized**
**in that** the subscriber access interface (TAS) is in the form of a subscriber access interface for a standardized, integrated service network (ISDN).

4. Communications system according to one of the preceding claims,
**characterized**
**in that** the local area network (LAN) is formed by a ring network (RN) using a standardized token access method (token passing).

5. Communications system according to one of the preceding claims, **characterized in that** the local area network (LAN) is formed by a bus network using random access methods (CSMA/CD methods).

6. Communications system according to one of the preceding claims, **characterized in that** the local area network (LAN) is formed by a star network (SN), with packet-oriented coupling arrangements (ATK) being arranged at the star point of the local area network (SN), for switching control of the messages to be transmitted.

7. Communications system according to one of the preceding claims, **characterized in that** the network matching device (APE) and/or the communications terminals (KE) have/has means for time matching of the message information which is transmitted in a packet-oriented manner in local area networks (LAN) to the isochronous switching and processing of the message information in the network matching device (APE) and/or the communications terminals (KE).

8. Communications system according to Claim 7, **characterized in that** the means for time matching are formed by clock-controlled memory means, with the size of the memory means and the packet length of the message and signalling information which is transmitted in the local area network (LAN) being matched to one another taking into account the extent of the local area network (LAN).

9. Communications system according to one of the preceding claims, **characterized in that** the communications installation (KA) is designed such that the communications installation (KA) controls the connection setting-up and clearing and/or influencing of service features of the narrowband or telephone communications connections (SB, FE) of the communications terminals (KE) in the local area network (LAN) to further communications terminals in the communications system.

## Revendications

1. Système de communication doté de terminaux de communication (KE) raccordés à un réseau local (LAN) travaillant par paquets, les terminaux de communication (KE) présentant chacun au moins certaines fonctions de communication à bande étroite ou de téléphonie (SB, FE),
dans lequel
- une installation de communication (KA) qui commande resp. qui agit sur les fonctions de communication à bande étroite resp. de téléphonie (SB, FE) et qui présente des interfaces de raccordement d'abonné (TAS) est prévue,
- entre le réseau local (LAN) et l'installation de communication (KA) est disposé un dispositif (APE) d'adaptation au réseau qui est raccordé par un dispositif d'accès (LANZ) au réseau local (LAN) et par des dispositifs d'abonnés (TLE) à des interfaces de raccordement d'abonné (TAS) de l'installation de communication (KA), une interface de raccordement d'abonné (TAS) étant prévue entre le dispositif (APE) d'adaptation au réseau et l'installation de communication (KA) pour chaque terminal de communication (KE) du réseau local (LAN) qui présente des fonctions de communication à bande étroite resp. de téléphonie (SB, FE),
- le dispositif (APE) d'adaptation au réseau présente une unité d'adaptation (AE) configurée de telle sorte que les informations de signalisation et de message transmises par les terminaux de communication (KE) resp. par l'installation de communication (KA) dans le cadre de la commande de liaisons de communication à bande étroite ou de téléphonie (SB, FE) sont adaptées aux procédures de signalisation et aux formats de messages de l'installation de communication (KA) resp. du réseau local (LAN), et dans lequel
- l'installation de communication (KA) est configurée de telle sorte que l'établissement ou la suppression d'une liaison et/ou une action des caractéristiques de service des liaisons de communication à bande étroite ou de téléphonie (SB, FE) des terminaux de communication (KE) du réseau local (LAN) entre eux est commandée par l'installation de communication (KA).

2. Système de communication selon la revendication 1, **caractérisé en ce que** dans l'installation de communication (KA) resp. dans le dispositif (APE) d'adaptation au réseau, l'interface de raccordement d'abonné (TAS) est formée par une interface numérique de raccordement d'abonné, simple ou multiplex.

3. Système de communication selon la revendication 1 ou 2, **caractérisé en ce que** l'interface (TAS) de raccordement d'abonné est réalisée sous la forme d'une interface de raccordement d'abonné d'un réseau normalisé à intégration de service (ISDN).

4. Système de communication selon l'une des revendications précédentes, **caractérisé en ce que** le réseau local (LAN) est réalisé sous la forme d'un réseau en boucle (RN) doté d'un procédé d'accès standardisé de type "token passing".

5. Système de communication selon l'une des revendications précédentes, **caractérisé en ce que** le réseau local (LAN) est réalisé sous la forme d'un réseau à bus avec procédé d'accès aléatoire (procédé CSMA/CD).

6. Système de communication selon l'une des revendications précédentes, **caractérisé en ce que** le réseau local (LAN) est réalisé sous la forme d'un réseau en étoile (SN), des agencements de couplage (ATK) fonctionnant par paquets en vue de commander par une technique de communication les messages transmis étant disposés au centre de l'étoile du réseau local (SN).

7. Système de communication selon l'une des revendications précédentes, **caractérisé en ce que** dans le dispositif (APE) d'adaptation au réseau resp. dans les terminaux de communication (KE) sont prévus des moyens d'adaptation temporelle des informations de message transmises par paquets dans le réseau local (LAN) à la transmission resp. au traitement isochrone des informations de message dans le dispositif (APE) d'adaptation au réseau resp. dans les terminaux de communication (KE).

8. Système de communication selon la revendication 7, **caractérisé en ce que** les moyens d'adaptation temporelle sont formés par des moyens à mémoire commandés par horloge, la taille des moyens à mémoire ainsi que la longueur des paquets des informations de message resp. de signalisation transmises dans le réseau local (LAN) étant accordées l'une à l'autre en tenant compte de l'étendue du réseau local (LAN).

9. Système de communication selon l'une des revendications précédentes, **caractérisé en ce que** l'installation de communication (KA) est configurée de telle sorte que l'établissement et la suppression d'une liaison et/ou une influence des caractéristiques de service des liaisons de communication à bande étroite ou de téléphonie (SB, FE) des terminaux de communication (KE) du réseau local (LAN) sur d'autres terminaux de communication du système de communication sont commandés par l'installation de communication (KA).
